# EUROPEAN PATENT APPLICATION

(11) **EP 3 045 422 A1**
(43) Date of publication of application: **20.07.2016**
(21) Application number: 16150970.8
(22) Date of filing: 12.01.2016
(51) Int. Cl.: B66F 9/19

(54) **FORKLIFT TRUCK APPARATUS**

(30) Priority: 14.01.2015 GB 201500533
(71) Applicant: Thompson, Samuel, Preston, Lancashire PR4 6ST (GB)
(72) Inventor: Thompson, Samuel, Preston, Lancashire PR4 6ST (GB)
(74) Representative: HGF Limited

(57) **Abstract**

A forklift truck apparatus (10) has a frame (14) for mounting to a forklift mechanism of a forklift truck (12). The apparatus (10) includes a beam (16) having a longitudinal axis mounted to the frame (14) so as to be displaceable relative to the frame in a direction substantially perpendicular to the longitudinal axis of the beam (16), and drive means (18, 20) operable to displace said beam (16) at a velocity which is a) proportional to and b) opposite in direction to the velocity of a movement of the forklift truck (12) when the frame (14) is mounted thereto. The apparatus (10) further has a torque transfer mechanism (50) for capturing a rotational driving force generated by a wheel (54), which in use is selectively engageable with the ground so as to rotate upon movement of the truck (12), and applies said force to the drive means (18, 20) to displace the beam (16).

## Description

### TECHNICAL FIELD

This invention relates to a forklift truck apparatus for displacing multiple articles, particularly for unloading them from a forklift truck.

### BACKGROUND

In a plant nursery, when propagating plants and growing plants during the early stages of plant development, plant pots and trays typically need to be transported in large numbers. Pots and trays are transported, for example, between stages of germination, planting of young seedlings and growing out, as different stages of plant growth typically take place in different areas of the nursery, or even at different nurseries.

The transport of pots and trays may be a highly labour intensive undertaking. Typically, pots and trays are loaded onto shelved trolleys for transport about the nursery and are unloaded from the trolleys manually in a practice sometimes known as "putting down". As labour accounts for a high proportion of a nursery's operating costs, nurseries seek to minimise their costs by increasing the efficiency of pot and tray movements. Further, the manual handling and repetitive actions involved in putting down the pots and trays may result in worker fatigue or injury, particularly of the arms, legs and back and repetitive strain injuries. Therefore, it is also desirable to reduce manual handling to prevent worker fatigue and injuries.

Nurseries typically employ forklift trucks which are adapted for the purpose of transporting multiple pots or trays. Known adaptions include use of fork-like members which comprise multiple tines (also referred to as teeth) which are spaced at intervals suitable for engagement of and lifting of a series of pots between each adjacent pair of tines. However, such fork like members are often not suitable for use with trays.

EP 1,455,566 discloses such a fork-like member with multiple tines for the transport and putting down of pots in which each tine is provided with a respective driveable carrier belt or chain capable of longitudinal movement to facilitate picking up and setting down of the pots. In this respect, the belts or chains impart a predetermined speed to the pots, which speed can be varied in order to vary the distance between respective rows of set down pots.

It is an object of the invention to increase the efficiency of plant movements about a nursery and minimise potential for manual handling injuries by providing alternative apparatus for putting down plant pots. A further object of the invention is to provide apparatus particularly suitable for unloading and putting down of trays.

### SUMMARY OF THE INVENTION

According to an aspect of the invention there is provided a forklift truck apparatus for displacing articles, the apparatus comprising: a frame adapted for mounting to a forklift mechanism of a forklift truck; a beam having a longitudinal axis, the beam being mounted to the frame so as to be displaceable relative to the frame in a direction substantially perpendicular to the longitudinal axis of the beam; and drive means configured for displacing the beam relative to the frame and operable to displace said beam at a velocity which is a) proportional to and b) opposite in direction to the velocity of a movement of the forklift truck when the frame is mounted thereto. The fact that the apparatus is capable of displacing multiple articles in this manner provides nursery operators with an efficient means to perform putting down of multiple plant pots and trays.

In preferred embodiments of the invention, the apparatus further comprises a torque transfer mechanism, e.g. for capturing a rotational driving force generated by a wheel and/or applying said force to the drive means to displace the beam. In use, the wheel may be selectively engageable with the ground, e.g. so as to rotate with the movement of the truck. The torque transfer mechanism may utilise the movement, which may be a reversing movement, of the forklift truck, e.g. during an unloading operation, to drive to the movement of the beam.

The torque transfer mechanism may include a drive wheel, e.g. for transferring the rotational force generated by the ground engageable wheel to the drive means. Further, the torque transfer mechanism may additionally or alternatively include a chain drive and/or one or more sprockets. The torque transfer mechanism may additionally or alternatively include a clutch, e.g. for disengaging the torque transfer mechanism from the drive wheel.

In other embodiments of the invention, the apparatus my further comprise a sensing means, which may be configured to sense the movement of the forklift truck. The apparatus may additionally or alternatively comprise an actuator or motor, which may be configured to apply a force to the drive means so as to displace the beam as the sensing means senses the movement of the forklift truck.

According to a further aspect of the invention, there is provided a forklift truck having apparatus as described above mounted to its forklift mechanism. Such a forklift truck provides nursery operators with an efficient means to perform putting down of multiple plant pots and trays.

### BRIEF DESCRIPTION OF THE DRAWINGS

The invention will be described further, by way of example, with reference to the accompanying drawings, in which:
Figure 1 is a perspective view of a preferred practical embodiment of apparatus in accordance with the invention, shown mounted to a forklift truck; and
Figure 2 is a schematic side view of the apparatus illustrated in figure 1, showing the arrangement of a torque transfer mechanism.

### DETAILED DESCRIPTION

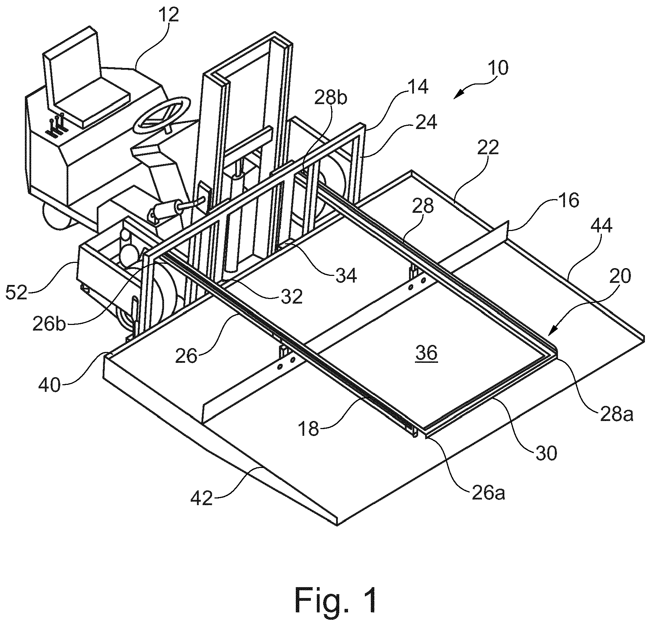

Figure 1 illustrates a forklift truck apparatus 10 in accordance with the invention mounted to a forklift mechanism, i.e. a carriage, of a forklift truck 12. It will be understood that the carriage is moveable so as to raise and lower the apparatus 10. The apparatus 10 includes a frame 14, a beam 16 and drive means in the form of a first chain 18 and a second chain 20. The frame 14 is attached to the carriage of the forklift truck 12 and the beam 16 is mounted to the frame 14 such that it is moveable by the first and second chains 18, 20. A platform 22 which is configured to carry multiple plant pots and trays is shown in combination with the apparatus 10.

The frame 14 incudes a truss 24, which comprises a rigid assembly of vertical and horizontal bars, and a pair of rails 26, 28. The truss 24 is engageable with the carriage of the forklift truck 12 so as to mount the frame 14 thereto. The truss 24 extends in a plane across the front of the truck 12 when said truss 24 is engaged with the carriage. The rails 26, 28, namely a first rail 26 and a second rail 28, are attached to an upper region of the truss 24 and extend substantially perpendicular to the plane of the truss 24. The rails 26, 28 are spaced apart, parallel and extend substantially horizontally in front of the forklift truck 12 when the frame 14 is mounted thereto. The rails 26, 28 have respective forwardmost ends 26a, 28a which are connected by a cross member 30, and respective rearmost ends 26b, 28b. The first rail 26 supports the first chain 18 and the second rail 28 supports the second chain 20. Further, the rails 26, 28 support the beam 16 such that it is suspended below and spans between the rails 26, 28, as well as extending beyond the rails 26, 28 at each side.

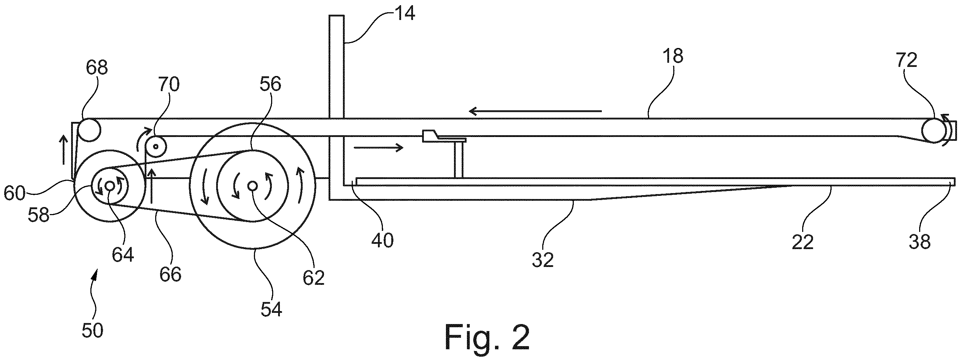

The frame 14 also includes a pair of tines 32, 34 which are engageable with the platform 22. Similar to the rails 26, 28, the tines 32, 34 are spaced apart, parallel and extend substantially horizontally in front of the forklift truck 12 when the frame 14 is mounted thereto. The tines 32, 34 are attached to and extend from a lower region of truss 24, as best shown in figure 2. The tines 32, 34 enable the frame 14 to support the platform 22 upon which plant pots and trays are placed for transport. The platform 22 has a substantial planar upper surface 36, a front edge 38, a rear edge 40 and side edges 42, 44. Respective flanges, which project above the surface 36 of the platform 14, extend along each of the rear edge 40 and side edges 42, 44. The rear edge 40 abuts the truss 24 when the tines 32, 34 are properly engaged with the platform 14. Plant pots and trays of varying sizes may be placed on the platform 22 for transport.

The beam 16 has a longitudinal axis which is substantial parallel to the truss 24 and is connected to the frame 14 by engagement with the rails 26, 28. The beam 16 is also engaged with the chains 18, 20 such that the beam 16 is displaceable along the rails 26, 28 relative to the frame 14, i.e. movement of the chains 18, 20 moves the beam 16. The beam 16 in moveable between a first position at a rearmost location of the beam 16 and a second position at a forwardmost location of the beam 16. With the platform 22 correctly in place, the beam 16 is adjacent the rear edge 40 when said beam 26 is in the first position and is adjacent the front edge 38 when in the second position.

Further, with the platform 22 in place, a lower edge of the beam 16 is adjacent the upper surface 36 of the platform 14. When the beam 22 is displaced it may move over the surface 36 of the platform between the front edge 38 and the rear edge 40, and vice versa. The length of the beam 16 is such that it spans the width of the platform 22, i.e. the beam 16 spans between the side edges 42, 44 when the platform 22 is in place on the apparatus 10.

The forklift apparatus 10 also includes a torque transfer mechanism 50, which is best shown in figure 2. The torque transfer mechanism 50 is provided in a housing 52 which is attached to the frame 14. More specifically, the housing 52 is attached the truss 24 and projects toward the rear of the forklift truck 12 when the frame 14 is mounted to the forklift truck 12.

The torque transfer mechanism 50 includes a ground engageable wheel 54, a first sprocket 56, a second sprocket 58 and drive wheel 60. The ground engageable wheel 54 and the first sprocket 56 are provided on a first axle 62 such that they rotate in unison about said first axle 62. Rotation of the ground engageable wheel 54 causes rotation of the first sprocket 56. The second sprocket 58 and the drive wheel 60 are provided on a second axle 64. The torque transfer mechanism 50 includes a clutch (not shown) which causes the drive wheel 60 selectively to rotate in unison with the second sprocket 58, i.e. the drive wheel 60 may be prevented from rotation while the second axle 64 rotates. The first and second sprockets 56, 58 are connected by a chain drive 66. This connection causes rotation of the first sprocket 56 to result in rotation of the second sprocket 58. The first sprocket 56 is a thirty-nine tooth sprocket, the second sprocket 58 is an eighteen tooth sprocket and the drive wheel 60 is a thirty-eight tooth sprocket. Both sprockets 56, 58 and the drive wheel 60 are of 5/8" (1.59cm) pitch. Of course, the pitch of the chains 18, 22 and the chain drive 66 is also 5/8" (1.59cm) so as to correspond with the pitch of the sprockets 56, 58 and of the drive wheel 60. The circumference of the ground engageable wheel 54 is 137cm. It will be understood that these specific dimensions are provided by way of example only and suitable combinations of differently sized sprockets, wheels and chains may be used in alternative embodiments.

The first chain 18 is engaged with the drive wheel 60. Further, the chain 18 is engaged with third, fourth and fifth sprockets 68, 70, 72 for the purpose of guiding the chain 18. The third and fourth sprockets 68, 70 are provided within the housing 52 for the purpose of the aligning the chain 18 with both the drive wheel 60 and the first rail 26. The fifth sprocket 72 is provided adjacent to the first forwardmost end 26a of the rail 26. The chain 18 passes from the drive wheel 60 to the third sprocket 68, from the third sprocket 68 to the fifth sprocket 72, from the fifth sprocket 72 the fourth sprocket 70, and from the fourth sprocket 70 back to the drive wheel 60. Thus, the chain 18 passes along the length of the first rail 26 and back again. The arrangement of the torque transfer mechanism 50 results in a rotational force acting about the first axle 62 upon rotation of the ground engaging wheel 54. The rotational force is transferred from the first axle 62 to the second axle 64 by virtue of the first and second sprockets 56, 58 and the chain drive 60. Consequently, the rotational force acting about the second axle 64 causes rotation of the drive wheel 60 which moves the first chain 18. Movement of the chain 18 and subsequent displacement of the beam 16 will be described below.

The second chain 20 (shown in figure 1) is engaged with a sixth sprocket (not shown), which is provided adjacent to the forwardmost end 28a of the second rail 28, and with a seventh sprocket (also not shown), which is provided adjacent to the rearmost end 28b of the second rail 28. The second chain 20 passes between the sixth and seventh sprockets along the second rail 28. A shaft extending between the fifth sprocket 72 and sixth sprocket at the forwardmost ends 26a, 28a of the rails 26, 28 rigidly connects the fifth sprocket 72 and sixth sprocket such that they rotate in unison. This causes the second chain 20 to move with the first chain 18 in displacing the beam 16.

A forklift operator uses the apparatus 10 to transport the platform 22 when said platform 22 is loaded with a plurality of plant pots and/or trays. During transport of the platform 22 the apparatus 10 is in a transit position, i.e. a raised position. The ground engageable wheel 54 is not engaged with the ground when the apparatus 10 is in the transit positon so said wheel is not caused to rotate. Prior to unloading the pots and trays from the platform 22, the operator manoeuvres the forklift truck 12 such that platform 22 is positioned above a desired location where the plurality of pots and/or trays are to be put down, typically directly onto the ground.

With the platform 22 in the desired location, the operator lowers the carriage if the forklift truck 12 in the conventional way so that the apparatus 10 is lowered into an unloading position, i.e. the front edge 38 of the platform 22 is adjacent to the ground and the ground engageable wheel 54 is in contact with the ground. The operator then puts the forklift truck 12 in reverse, moving it in a rearward direction and causing the ground engageable wheel 54 to rotate as indicated by the arrows in figure 2. Rotation of the ground engageable wheel 54 results in the beam 16 being displaced from the first position, at the rear of the platform 22, to the second position, to the front of the platform 22. The beam 16 exhibits a false stationary effect as it moves in a forward direction between the rear edge 40 and the front edge 38 of the platform 22. The false stationary effect arises as, owing to the arrangement of the torque transfer mechanism 50 described above, the beam 16 is displaced in an opposite direction to the rearward movement of the forklift truck 12 at a velocity which is equal to that of said movement of said forklift truck 12.

As the beam 16 moves toward the front edge 38 of the platform 22 it pushed against the plant pots and/or trays. Therefore, the pots and/or trays also exhibit a false stationary effect when being displaced by the beam 16. The beam 16 displaces the pots and/or trays such that they are unloaded from the platform 22 in a single automated operation. The platform 22 is essentially pulled out from underneath the plant pots and/or trays. The flanges provided on the side edges 38, 40 prevent pots and trays being displaced from the platform 14 other than over the front edge 34. The flanges may also stiffen the platform 14.

Once the beam 16 has been displaced such that it is in the second position, i.e. the beam 16 is adjacent to the front edge 38 of the platform 22 and the pots and/or trays have been displaced form the platform 22, the beam will reach a limit to its forward movement. Consequently, movement of the chains 18, 20 stop as too does rotation of the drive wheel 60, by virtue of its engagement with the first chain 18. The clutch permits rotation of the second axle 64 if the forklift truck 12 is still reversing and thus causing the ground engageable wheel 54 to rotate. After the unloading operation is complete the operator raises the carriage of the forklift truck 12, thus disengaging the ground engageable wheel 54 and the ground. To return the beam 16 to the first position, the operator lowers the carriage again so that the apparatus 10 is once again in the unloading position and then moves the forklift truck 12 in a forward direction. This causes the ground engageable wheel 54 to rotate in an opposite direction to that in which it rotates when performing an unloading operation and results in the beam 16 moving back from the second position to the first position. Of course, this is performed away from the location where the plant pots and/or trays have been put down. The platform 22 may then be detached from tines 32, 34 by further lowering the carriage until the platform 22 is placed on the ground and reversing the forklift truck 12 to slide the tines 32, 34 out from beneath the platform 22. Of course, it will be understood that platform 22 may be placed on a raised surface rather than the ground and that the raised surface may be any suitable surface for placement of the platform 22, for example the back of a trailer. The forklift operator may then attach another identical platform that is full of pots and/or trays and repeat the task of putting down.

In any embodiment the forklift truck apparatus of the invention enables the putting down of multiple plant pots and trays in an automated manner. Further, in any embodiment the invention provides a forklift truck apparatus which, when mounted to a forklift truck, is capable of displacing articles at a velocity which is proportional to and opposite in direction to the velocity of a movement of the forklift truck. However, the invention is not restricted to the details of the forgoing embodiment and other embodiments are possible within the scope of the invention as defined in the claims.

In certain embodiments, such as the embodiment described above, the velocity of the beam may be equal in magnitude to the velocity of the movement of the forklift truck. However, in other embodiments the velocity of the beam may be unequal in magnitude to the velocity of the movement of the forklift truck, for example the velocity of the beam may be less than the magnitude of the velocity of the movement of the forklift truck. This may be achieved by providing the torque transfer mechanism described above but with a drive will having fewer teeth.

In certain alternative embodiments the ground engageable wheel may not be provided on the frame of the apparatus, for example it may instead be a conventional wheel of the forklift truck which is selectively engaged by a suitable torque transfer mechanism during an unloading operation to provide the driving force to move the beam.

In certain alternative embodiments, the apparatus may not be provided with a torque transfer mechanism. Instead, the apparatus may include a sensing means adapted to sense the movement of the forklift truck as it reverses and which causes an actuator or motor to apply a force to the drive means. The sensing means and actuator or motor may be operated by a control unit provided on the apparatus or on the forklift truck.

Throughout the description and claims of this specification, the words "comprise" and "contain" and variations of them mean "including but not limited to", and they are not intended to (and do not) exclude other components. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. Forklift truck apparatus (10) for displacing articles, the apparatus comprising:
a frame (14) adapted for mounting to a forklift mechanism of a forklift truck (12);
a beam (16) having a longitudinal axis, the beam being mounted to the frame so as to be displaceable relative to the frame in a direction substantially perpendicular to the longitudinal axis of the beam; and
drive means (18, 20) configured for displacing the beam relative to the frame and operable to displace said beam at a velocity which is a) proportional to and b) opposite in direction to the velocity of a movement of the forklift truck when the frame is mounted thereto,
**characterised in that** the forklift truck apparatus (10) further comprises a torque transfer mechanism (50) configured to capture a rotational driving force generated by a wheel (54) which in use is selectively engageable with the ground so as to rotate upon movement of the truck (12), and to apply said force to the drive means (18, 20) to displace the beam (16).

2. Apparatus according to claim 1, wherein the torque transfer mechanism (50) includes a drive wheel (60) for transferring the rotational force generated by the ground engageable wheel (54) to the drive means (18, 20).

3. Apparatus according to claim 2, wherein the torque transfer mechanism (50) includes a chain drive (66) and one or more sprockets (56, 58).

4. Apparatus according to claim 3, wherein the torque transfer mechanism (50) includes a clutch for disengaging the torque transfer mechanism from the drive wheel (60).

5. Apparatus according to any preceding claim, wherein the ground engageable wheel (54) is part of the apparatus and is mounted to the frame (14).

6. A forklift truck (12) having apparatus (10) according to any preceding claim mounted to its forklift mechanism.

7. A forklift truck (12) having apparatus (10) according to claim 1 mounted to its forklift mechanism and wherein the ground engageable wheel (54) is a conventional wheel for locomotion of the truck.

8. A forklift truck (12) according to claim 6 or 7 in combination with a platform (22) which is mounted to the forklift mechanism, which provides a surface (36) for placement and transport of plural articles, and relative to which the beam (16) is displaceable to push the articles off the surface of the platform as the truck reverses.
